# EUROPEAN PATENT APPLICATION

(11) **EP 2 063 581 A1**
(43) Date of publication of application: **27.05.2009**
(21) Application number: 07121139.5
(22) Date of filing: 20.11.2007
(51) Int. Cl.: H04L 12/56, G06F 13/00

(54) **Transferring a stream of data between first and second electronic devices via a network on-chip**

(71) Applicant: STMicroelectronics (Grenoble) SAS, 38000 Grenoble (FR)
(72) Inventor: Maruccia, Guiseppe, 38000 Grenoble (FR); Locatelli, Ricardo, 38120 Fontanil-Cornillon (FR); Pieralisi, Lorenzo, 38180 Seyssins (FR); Copolla, Marcello, 38360 Sassenage (FR); Casula, Michele, 09170 Oristano (IT); Fanucci, Luca, 51016 Montecatini Terme (Pistoia) (IT); Saponara, Sergio, 56100 Pisa (IT)
(74) Representative: Delprat, Olivier

(57) **Abstract**

This method for transferring a stream of at least one data packet between a first electronic device and second electronic device through a network-on-chip, comprises:
- storing data packets in memory means (2, 3) provided in a network interface; and
- transferring data packets from the memory means to the second electronic device,

Packets are transferred from the memory means (2, 3) after a quantity of packets is stored in the memory means, said quantity of packets being determined according to a value of a control parameter.

## Description

The invention relates, in general, to on-chip communication architectures and is in particular directed to the transmission of data from a source electronic device to a destination electronic device belonging to separate interconnection systems such as on-chip communication architectures.

For example, generally speaking, the invention is thus directed to the communication of data through a so-called network-on-chip system between electronic devices each connected to an on-chip bus.

As a matter of fact, researchers have recently proposed the network-on-chip concept (NoC) to overcome the limitations relating to the huge efforts necessary to adequately design on-chip communication systems.

NoC aims at providing scalable and flexible communication architectures with suitable performances. NoCs are based on a packet switched communication concept and are mainly composed of three NoCs modules, namely: a router, a network interface (NI) and a link.

As concerns the data format, data transferred within a NoC are generally composed of data packets having a header and a payload. The header contains control data for controlling data transfer and is thus responsible for carrying all the information required for performing communication, whereas the payload contains the actual information to be transmitted.

Conversely, data packets transmitted over an on-chip bus are based on specific transaction protocols. For example, the so-called "ST bus" developed by the applicant is based on a "ST bus protocol type 3" using a separate request channel and a response channel to provide communication between an initiator module and a target module.

On on-chip buses, data packets may be transmitted using two separate channels, namely a first channel provided to transfer control data and a second channel provided to transfer actual data to be used by the destination electronic device.

To provide communication between electronic devices connected to an on-chip bus, conversion of data must be carried out when data are transferred through a NoC.

Usually, network interfaces are in particular provided to provide communication with a NoC in order to convert data from one format to another.

For data conversion, the network interfaces are each provided with a memory means in which are stored the packets produced by the network interface before injection in the NoC, the stored packets having a header, comprising control data used to control transfer of data, and a payload, comprising data to be transferred. For example a payload is present in request packets when a store operation is performed.

Packet injection is then realized from data stored in the memory means.

In view of the foregoing, it is hereby proposed a method for transferring data through a network-on-chip permitting in addition to reduce latency and, as the case may be, to check integrity of data before forwarding.

In particular, it is hereby proposed a method for transferring data through a network-on-chip permitting to reduce latency and, as the case may be, to check integrity of data transferred in a form a stream of data packets.

Accordingly, according to one approach, it is hereby proposed a method for transferring a stream of at least one data packet between a first electronic device and a second electronic device through a network-on-chip, comprising:
- storing data packets in memory means provided in a network interface; and
- transferring data packets from the memory means to the second device.

According to a general feature of this method, packets are transferred from the memory means after a quantity of packets is stored in the memory means, said quantity being determined according to a value of a control parameter.

Accordingly, this method provides a so called "store and forward" mechanism in which a predetermined number of data packets are stored in memory means before being transferred to a destination device.

According to one embodiment, data packets are transferred when said memory means are full.

According to another feature, the method comprises in addition comparing a write pointer and a read pointer for said memory means and transferring said packets when the result of this comparison indicates that packets have been stored in the memory means.

According to a further feature, packets comprising a header and a payload, said header is stored in a header memory and said paylod is stored in a payload memory. The value of the header memory write pointer is updated when said quantity of packets have been stored in the memory means.

In one embodiment, the method is intended to transfer a stream of one data packet. The value of the header memory write pointer is thus updated when the last data of said data packet has been stored in the memory means.

The method may also comprise, in addition, detecting a first flag in said packet, indicating the last data of said packet.

The method can also be used for transferring a stream of at least two packets. The value of the header memory write pointer is updated for each packet to check, for each packet, the value of a second flag indicating the last packet or an end of packet stream of said stream of data packets.

In one embodiment, the method comprises, in addition, accessing the header memory for scanning each packet header stored in the memory means using an auxiliary pointer updated after each packet storage to detect, in said packet header, said second flag, and authorizing the packets transferring when the memory means are not empty, after detection of said second flag.

The method may thus comprise, in addition, detecting a flag in each header indicating whether said packet comprises a payload.

For example, the header memory write pointer is updated when the second memory is full.

Data may in addition be transferred when the first or the second memory is full.

According to another aspect, it is in addition proposed a device for transferring a stream of at least one data packet between a first electronic device and a second electronic device through a network-on-chip.

This device comprises memory means for storing data packets and causing a transfer of packets after a quantity of packets is stored in the memory means, said quantity of packets being determined according to the value of a control parameter.

According to another feature of this device, the memory means comprise a header memory for storing a header of each packet comprising control data for controlling data transfer, and a payload memory for storing a payload comprising actual data to be transferred.

According to another feature, the device comprises in addition, means for detecting a first flag in said memory means, indicating the last data of said packet, and means for updating a write pointer for the memory means after detection of said first flag.

According to yet another feature, the device comprises in addition, means for detecting a full status of the second memory and means for updating the write pointer after detection of said full status.

It may also comprise means for comparing the write pointer and a read pointer for said memory means to cause reading of the memory means when the result of the comparison indicates that packets have been stored in the memory means.

It may in addition comprise means for checking the value of a second flag indicating the last packet of said stream of data packets to cause reading of the memory means when said last packet is stored in the memory means.

For example, the device further comprises means for detecting a full status of the first and second memories to cause reading of said memory means after detection of a full status of either the first memory or the second memory.

It is in addition proposed an electronic equipment comprising a chip having a network-on-chip and a network interface for transferring a stream of at least one data packet between a first electronic device and a second electronic device through the network-on-chip, wherein said network interface comprises a device as defined above.

Other features and advantages will become apparent from the following description, given only by way of example, and in the following drawings, in which:
- figure 1 illustrates the general context of the method and device for transferring stream of data packets between the first and second electronic devices;
- figure 2 shows schematically the architecture of a network interface implemented to provide communication between a network-on-chip and an on-chip bus;
- figure 3 illustrates the block diagram organization of a network interface as far as a request path is concerned ;
- figure 4 illustrates the block diagram organization of a network interface as far as a response path is concerned ;
- figure 5 illustrates the generation of an empty signal used to trigger reading of the first memory when the store and forward mechanism is not active;
- figure 6 illustrates the generation of an empty signal used to trigger the reading of the first memory when the store and forward method mechanism is active on one packet basis;
- figure 7 illustrates the generation of the empty signal used to trigger the reading of the first memory when the store and forward mechanism is active on a burst of packet basis.

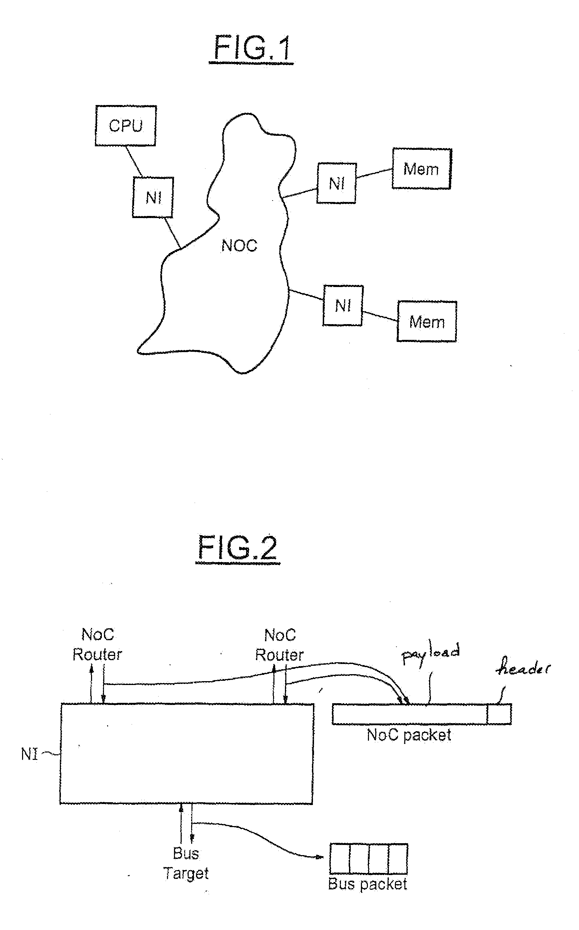

Reference is made to figure 1, showing an overview of a NoC used to connect together communicating elements.

In the illustrated embodiment, NoC provides a communication between electronic devices.

NoC is thus an interconnection network providing efficient means to manage communication among the communicating elements, such as Central Possessing Unit (CPU), Memory (Mem), subsystems,...

As illustrated, access to the NoC is made through network interfaces NI which support security for the communication system, by filtering requests to access the network at requested address.

The network interface NI is intended to provide communication between two separate interconnect systems namely, in the illustrated example, a network-on-chip and an on-chip bus.

Referring to figure 2, this network interface is used as enter and exit point of the NoC, to transfer data from a source electronic device to a destination electronic device connected to the NI through a on-chip bus or, generally speaking, to transfer data through the NoC.

However, it should be noted that the network interface can be used to allow communication between other types of interconnection systems and, in particular, it can be used with other on-chip protocols, namely the so-called AMBA, AXI, OCP, ...protocols.

As it is known, data transmitted through the network on-chip and through the on-chip bus have differing formats, the NI being responsible for adapting the data from one format to another.

As a matter of fact, network on-chip is a communication architecture for systems on-chip, usually based on the concept of packet switching rather than circuit switching.

In on-chip bus, data are transmitted in the form of packets consisting in a set of cells that are not interruptible. For example, as indicated above, one channel may be used to transmit control data, another channel being provided to transfer the actual data to be transmitted. In a NoC context, the packets are split into basic units called flits (Flow Control Units), and comprise header containing the control data responsible for carrying all the information required for performing communication and, depending on the kind of operation performed, a payload containing actual information to be transmitted and a.

The network interface is thus intended to realize a conversion of packets according to the protocol supported by the on-chip bus into packets having the structure corresponding to the network on-chip concept. In addition, the network interface is intended to convert packets issued from the NoC into packets corresponding to the on-chip bus.

Beside, in order to reduce latency, and in particular due to the requested conversion of format necessary to transfer the data packets from the first electronic device to the second electronic device, the network interface provides a store and forward mechanism during transfer.

In other words, data packets are stored in memory means provided within the network interface, and data packets are read from the memory means after the packets have been stored.

However, the store and forward mechanism can be carried out on one packet basis or on a burst of packet basis, according to a value of a control parameter previously set during the network interface programming.

For example, the control parameter can be set to "0", "1", or "2".

When the control parameter is set to "0", the store and forward mechanism is not active. Accordingly, data, namely flits, issued from the network-on-chip or bus cells, issued from the on-chip bus, are transmitted as soon as some information is available in the memory.

When the control parameter is set to "1" or "2", the store and forward mechanism is active and, before transferring the flits, issued from the network-on-chip, or the cells, issued from the on-chip bus, the network interface waits for an entire stream of packets is collected into the memory, unless the memory is full.

In other words, when the control parameter is set to "1", the memory is read when it is determined that it is not empty and that a full packet has been previously stored in the memory.

Conversely, when the control parameter is set to "2", the network interface waits for a plurality of packets, namely a burst of packets, have been previously stored in the memory.

As it will be appreciated, this store and forward mechanism can be used to transfer a stream of at least one data packet from one electronic device to another through a network interface.

The network-on-chip thus provides means for controlling the transfer of data in a bidirectional way.

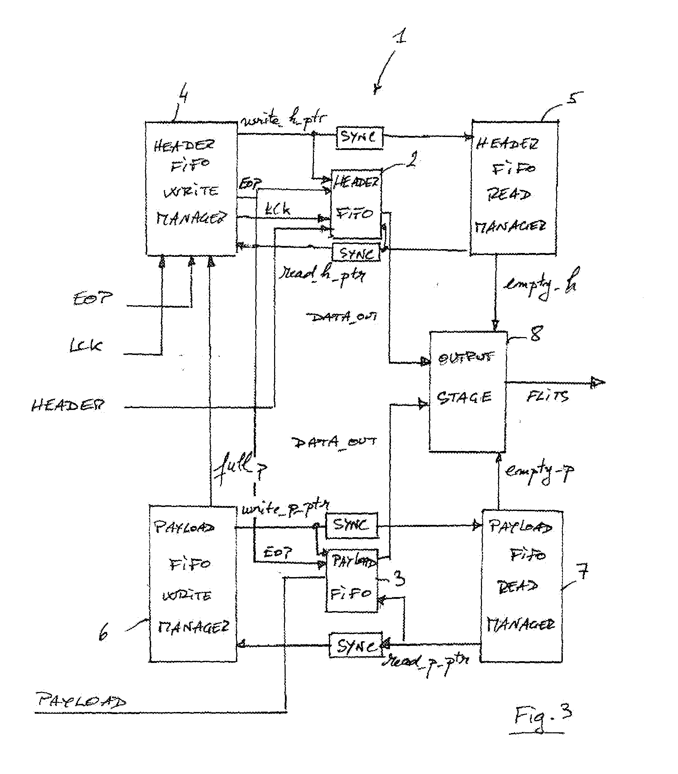

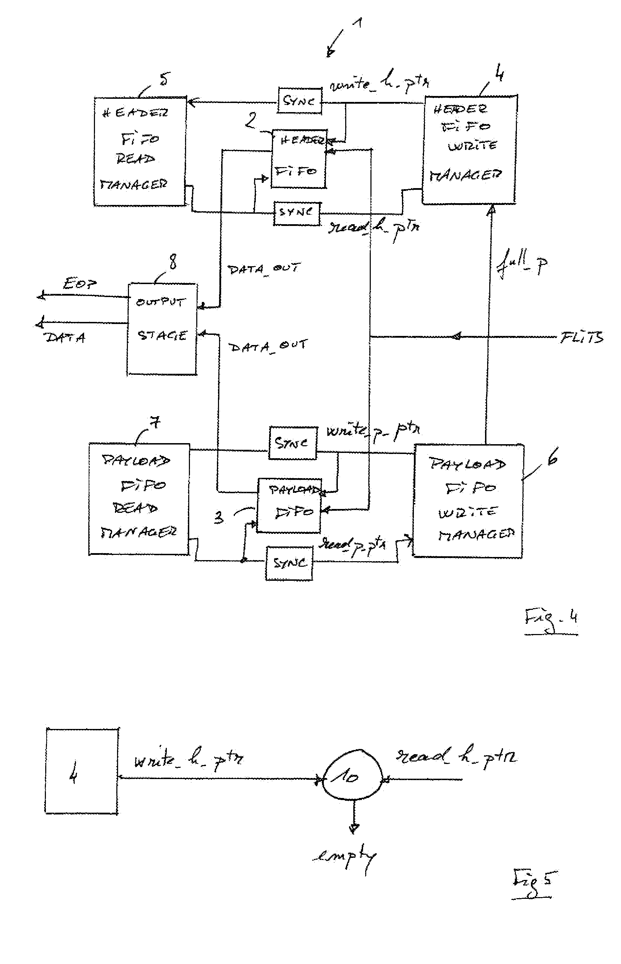

Although figure 3 illustrates the general organization of the network interface to control the packets stream following a request issued from a first device connected to the on-chip bus, for example a Central Processing Unit (CPU) requesting to access a memory, figure 4 illustrates the transfer of data according to a response path, namely from a second device, such as a memory to the CPU. However, it should be noted that elements of the request path and of the response path are provided in the same NI in the form of two parallel circuitries.

As far as the transfer of data is concerned, and in particular data conversion, the network interface comprises two stages having a substantially symmetrical structure illustrated in figures 3 and 4, in which identical elements are denoted by the same references.

Figure 3 illustrates a path of a request transmitted from a first device to access a second device to proceed with an operation such as read, store, write, load, ... Figure 4 concerns a path of a response transmitted from the second device to the first device in reply to the request previously transmitted.

Communication between the on-chip bus and the network interface may be based on a so-called request and grant process in which grant signals are transmitted to the on-chip bus in reply to a request to allow reception of data.

Beside, process used to transfer data between the network interface and the network-on-chip may be based on a credit based control process, in which "credits" are transmitted to the NI, said credits corresponding to a quantity of data that the NI is authorized to transmit. Upon receipt, the NI can transmit data to the NoC for so long as the credits last.

In both paths, conversion of data requires storage of data retrieved from the NI in memory means 1 for storing control data used to control data transfer and the actual data to be transferred.

According to the embodiment illustrated in figures 3 and 4, storage means 1 comprise two memories 2 and 3.

For example, the memories 2 and 3 consist each in a first-in first-out memory (FIFO).

The first FIFO 2 is used to store packet header data for packets transferred in the network-on-chip, whereas FIFO 3 is used to store a packet payload data for the packets injected in or extracted from the NoC.

According to the request path, initiator transaction requests issued from the source electronic device to access the destination electronic device are retrieved by the network interface and are stored in the header FIFO 2 and payload FIFO 3, such that control data are stored in the header FIFO 2, whereas actual data to be transferred are stored in the payload FIFO 3.

However, it should be noted that data retrieved from a transaction issued from the on-chip bus are stored in the FIFO 2 and 3 in a packet shape. The saved packets are then forwarded to the NoC, split into flits.

As illustrated in figure 4, illustrating the response path, namely the flow of data in the NI in reply to a request issued from the on-chip bus (figure 3), packets split into flits issued from the network-on-chip and received by the network interface are stored in the FIFOs. After packet reconstruction, according to the on-chip bus protocol, data are transferred to the on-chip bus.

In view of the foregoing, the network interface comprises a header FIFO write manager 4 and a header FIFO read manager 5 intended respectively to write data in the header FIFO 2 and to read data from the header FIFO 2 using write and read pointers, respectively *write_h_ptr* and *read_h_ptr*.

Besides, the network interface comprises a payload FIFO write manager 6 and a payload FIFO read manager 7 intended, respectively, to control writing of payload within the payload FIFO 3 and to read payload data from the payload FIFO 3, using write and read pointers, respectively *write_p_ptr* and *read_p_ptr*.

On the write side, for each packet, according to the value of the control parameter, header is stored within the header FIFO 2, whereas payload is stored in the payload FIFO 3 at an address corresponding to the write pointers *write_h_ptr* and *write_p_ptr*.

As explained below, the header FIFO 1 write manager receives a flag signal EOP indicating an end of packet, a lock flag LCK, the value of which is intended to indicate an end of a packet stream. As a matter of fact, it should be noted that each packet of the data stream comprises an EOP flag set to a valid value at the end of the packet and a LCK flag indicating the last packet of the stream. Both EOP and LCK are then stored in the memory means. EOP flag is stored in the header or payload FIFO depending on the kind of transaction requested, while LCK flag is stored in the header.

Besides, an output stage 8 receiving empty signals, respectively *empty_h* and *empty_p* from the header FIFO read manager 5 and from the payload FIFO read manager 8 is used to retrieve data from the header FIFO 2 and the payload FIFO 3. According to the request path (figure 3) data are then transferred, split into flits to the destination electronic device. In the response path, the retrieved data are then forwarded to the on-chip bus.

In other words, when the header FIFO read manager and the payload FIFO read manager indicate to the output stage 8 that data are stored to the header FIFO and the payload FIFO, respectively, the output stage, constituted for example by a finite state machine, send a read request in order to retrieve data from the FIFOs 2 and 3.

As previously indicated, when the control parameter is set to "0", the store and forward mechanism is not active. The header is written in the header FIFO and, when the header indicates that a payload is associated with a header, this payload is stored within the payload FIFO 3.

The write pointer *write_h_ptr* of the header FIFO 2 is immediately updated.

Conversely, when the control parameter is set to "1" or "2", the store and forward mechanism is active per packet, or per burst of packet. The header is written but the write pointer is updated only when the last payload flit relative to this header has been stored in the payload FIFO 3, or when the payload FIFO is full.

In other words, the *write_h_ptr* pointer is updated when the header FIFO write manager receives the first flag EOP (figure 3) or receives the full signal *full_p* from the payload FIFO write manager 6.

On the read side, data are retrieved from the header FIFO 2 and from the payload FIFO 3 according to the value of the control parameter.

When the control parameter is set to "0" or "1", the store and forward mechanism is not active or is active per packet. The header is read as soon as the comparison of the synchronized copy of the write pointer *write_h_ptr* and of the read pointer *read_h_ptr* indicates that the header FIFO is not empty.

Referring to figure 5, the header FIFO read manager thus comprises an empty manager, comprising comparing means 10 used to compare the write pointer *write_h_ptr* and the read pointer *read_h_ptr* to elaborate an empty flag *empty_h*.

Accordingly, the header is read as soon as the comparison between the pointers indicates that the header FIFO is not empty.

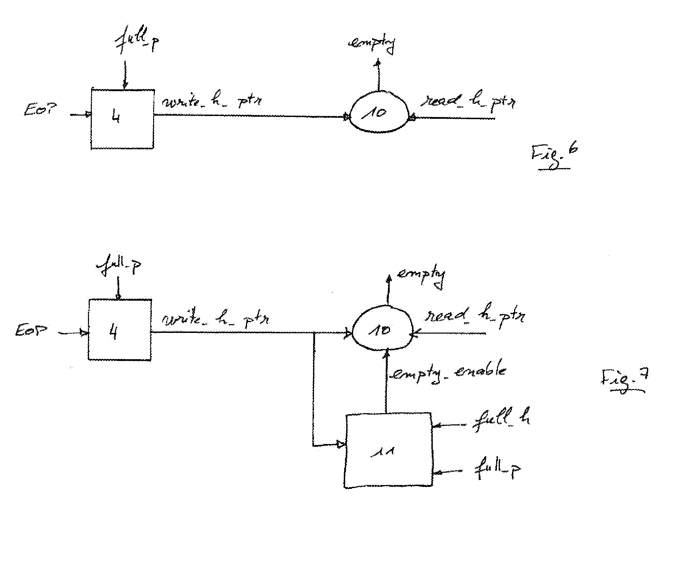

Referring to figure 6, when the control parameter is set to "1", the write pointer is updated only when the complete packet has been stored in the header and payload FIFOs, unless the payload FIFO is full.

As illustrated, the header FIFO write manager 4 receives the end of packet flag EOP and the full flag *full_p* and updates the write pointer accordingly. The empty signal is elaborated, as previously indicated, by comparing the write and read pointers.

Referring now to figure 7, when the control parameter is set to "2", the store and forward mechanism is active per burst of packets.

The header is read either when the last header of the stream of packets has been stored in the header FIFO or when either the header FIFO or the payload FIFO is full.

The empty signal is elaborated as previously indicated but the empty flag is disabled as long as the last packet of the stream of packets has not been stored in a memory.

It should be noted that as long as a full stream of data packets has not been transmitted to the network interface, a lock field LCK in the header is set to indicate that the last packet has not yet been transferred to the network interface.

Referring to figure 7, the write pointer *write_h_ptr* is updated as previously indicated from the full flag *full_p* and end of packet flag EOP, and thus the updated write pointer is transmitted to the empty manager 10.

Besides, a finite state machine 11 scans the header to check the value of the LCK field.

In addition, the finite state machine 11 receives the full flags, namely *full_h* and *full_p* to check whether the header FIFO 2 or the payload FIFO 3 is full.

When the finite state machine 11 has determined that the whole stream of packets has been stored within the memory or that either the header FIFO or the payload FIFO is full, an empty enable flag *empty_enable* is set to authorize the empty manager 10 to generate the empty flag *flag_empty*.

To implement the generation of the empty enable flag, a dummy read of the header is carried out using an auxiliary read pointer *rd_ptr_aux* in order to determine the value of the lock field LCK.

The write pointer is updated in a per packet basis. However, this update is not used immediately to produce the empty flag. It is used to indicate to the logic circuitry that manages the auxiliary read pointer that a new packet belonging to the current stream has been stored. It means that packets of stream are examined on a per-packet basis. Each header is examined once the complete packet is received. When the LCK flag is finally found equal to 1, this information is used to pass the empty signal to the output stage 8 that starts to read packets from the first packet of the current stream.

## Claims

1. Method for transferring a stream of at least one data packet between a first electronic device and second electronic device through a network-on-chip, comprising:
- storing data packets in memory means (2, 3) provided in a network interface; and
- transferring data packets from the memory means to the second device,
**characterized in that** packets are transferred from the memory means (2, 3) after a quantity of packets is stored in the memory means, said quantity of packets being determined according to a value of a control parameter.

2. Method according to claim 1, wherein packets are transferred when said memory means are full.

3. Method according to claims 1 or 2, comprising in addition, comparing a write pointer (*write_h_ptr*) and a read pointer (*read_h_ptr*) for said memory means (2, 3) and transferring said packets when the result of this comparison indicates that packets have been stored in the memory means.

4. Method according to any of claims 1 to 3, wherein packets comprise a header and a payload, said header is stored in a header memory (2) and said payload is stored in a payload memory (3).

5. Method according to claim 4, wherein the value of a header memory write pointer is updated when said quantity of packets have been stored in the memory means.

6. Method according to claim 5, for transferring a stream of one data packet, wherein the value of the header memory write pointer is updated when the last data of said data packet has been stored in the memory means.

7. Method according to claim 6, comprising in addition detecting a first flag (EOP) in said packet indicating the last data of said packet.

8. Method according to claim 5, for transferring a stream of at least two packets, wherein the value of the header memory write pointer (*write_h_ptr*) is updated for each packet to check, for each packet, the value of a second flag (LCK) indicating the last packet on an end of packet stream of said stream of data packets.

9. Method according to claim 8, comprising in addition accessing the header memory means for scanning each packet header stored in the memory means using an auxiliary read pointer updated after each packet storage to detect, in said packet header, said second flag (LCK), and authorizing the packets transferring when the memory means are not empty.

10. Method according to claim 9, comprising in addition detecting a flag in each header indicating whether said packet comprises a payload.

11. Method according to claim 10, wherein the header memory write pointer (*write_h_ptr*) is updated when the second memory is full.

12. Method according to claim 11, wherein data are transferred when the first or the second memory is full.

13. Device for transferring a stream of at least one data packet between a first electronic device and a second electronic device through a network-on-chip, **characterized in that** it comprises memory means (2, 3) for storing data packets and causing transfer of packets after a quantity of packets is stored in the memory means, said quantity of packets being determined according to a value of a control parameter.

14. Device according to claim 13, wherein the memory means comprise a header memory (2) for storing a header of each packet comprising control data for controlling data transfer, and a payload memory (3) for storing a payload comprising actual data to be transferred.

15. Device according to claim 14, comprising in addition means for detecting a first flag (EOP) in said memory means indicating the last data of said packet, and means for updating a write pointer (*write_h_ptr*) for the memory means after detection of said first flag (EOP).

16. Device according to claim 15, comprising, in addition, means for detecting a full status of the second memory (3) and means for updating the write pointer after detection of said full status.

17. Device according to claim 16, comprising means for comparing the write pointer (*write_h_ptr*) and a read pointer (*read_h_ptr*) for said memory means to cause reading of the memory means when the result of the comparison indicates that packets have been stored in the memory means.

18. Device according to any of claims 14 to 17, comprising in addition means for checking the value of a second flag (LCK) indicating the last packet of said stream of data packets to cause reading of the memory means when said last packet is stored in the memory means.

19. Device according to claim 18, comprising in addition means for detecting a full status of the first and second memories to cause reading of said memory means after detection of full status of either the first memory or the second memory.

20. Electronic equipment comprising a chip having a network-on-chip and a network interface for transferring a stream of at least one data packet between a first electronic device and a second electronic device through the network-on-chip, **characterized in that** it comprises a device according to any of claims 13 to 19.
